# EUROPÄISCHE PATENTSCHRIFT

(11) **EP 1 847 769 B1**
(45) Veröffentlichungstag und Bekanntmachung des Hinweises auf die Patenterteilung: **24.09.2008**
(21) Anmeldenummer: 06008366.4
(22) Anmeldetag: 22.04.2006
(51) Int. Cl.: F21V 19/00, F16B 5/06

(54) **Befestigungssystem, insbesondere für Lampen**
Mounting system, especially for lamps
Système d'ancrage, spécialement pour lampes

(43) Veröffentlichungstag der Anmeldung: 24.10.2007
(73) Patentinhaber: Gimpel, Matthias, Dipl.-Phys. Ing., 52062 Aachen (DE)
(72) Erfinder: Gimpel, Matthias, Dipl.-Phys. Ing., 52062 Aachen (DE); Kleist, Holmer Holger, 52064 Aachen (DE)
(74) Vertreter: Paul, Dieter-Alfred

(56) Entgegenhaltungen:
- EP-A- 0 315 520
- DE-U1- 9 104 244
- US-A- 4 976 633

## Beschreibung

Die Erfindung betrifft ein Befestigungssystem, insbesondere für eine Lampe mit einer an einer Wand, Decke oder dergleichen anbringbaren Montageeinheit und einer Gehäusebodenplatte, wobei die Montageeinheit und die Gehäusebodenplatte über wenigstens eine Verbindungseinrichtung lösbar miteinander verbunden sind und die Verbindungseinrichtung an der Montageeinheit und der Gehäusebodenplatte vorgesehene, paarweise kooperierende Verbindungselemente aufweist.

Lampen, die an einer Wand oder einer Decke eines Raumes angebracht werden sollen, sind häufig zweiteilig ausgebildet und weisen eine Montageeinheit und einen Lampenkörper auf, wobei die Montageeinheit etwa mit Hilfe von Schrauben an der Wand befestigt und anschließend der Lampenkörper mit der Montageeinheit verbunden wird. Nachteilig ist hier, dass bei bekannten Lampen das Anbringen und auch das Abnehmen des Lampenkörpers, etwa zu Wartungszwecken, aufwendig und kompliziert ist. Es besteht daher ein Bedarf für ein Befestigungssystem, das es ermöglicht, den Lampenkörper schnell und einfach an der Montageeinheit zu befestigen und ihn eben so leicht davon wieder lösen zu können.

In der EP 0 315 520 ist eine Beleuchtungsvorrichtung mit einer Leuchtstoffröhrenlampe beschrieben. Die Beleuchtungseinrichtung weist eine an einer Decke anbringbare Montageeinheit und ein Licht durchlässiges Gehäuse auf, die miteinander verrastet werden können. Dabei hinterfassen Haken, die an elastischen Armen der Montageeinheit befestigt sind, eine Leiste des Gehäuses.

Nachteilig ist hier, dass bei den bekannten Lampen das Anbringen und auch das Abnehmen des Lampenkörpers, etwa zu Wartungszwecken, aufwendig und kompliziert ist. Es besteht daher ein Bedarf für ein Befestigungssystem, das es ermöglicht,

Erfindungsgemäß wird diese Aufgabe dadurch gelöst, dass das erste Verbindungselement der Verbindungseinrichtung ringförmig mit einem umlaufenden Steg und das zweite Verbindungselement deckelartig mit einem Deckelboden und einem aus einzelnen Laschen bestehenden Randbreich ausgebildet sind, wobei das zweite verbindungselement derart auf das erste Verbindungselement aufschiebbar ist, dass sein laschenförmig ausgebildeter Randbereich den Steg des ersten Verbindungselements verrastend hinterfasst, und wobei das zweite Verbindungselement durch eine auf den Deckel in Richtung des ersten Verbindungselements wirkende Kraft in eine Entnahmestellung gebracht werden kann, in der der laschenförmige Randbereich nach außen aufgeweitet ist und den Steg des ersten Verbindungselements freigibt.

Grundgedanke der Erfindung ist es also, die Verbindungseinrichtung derart auszubilden, dass das zweite Verbindungselement in seiner Haltestellung auf das erste Verbindungselement der Verbindungseinrichtung aufgeschoben werden kann und dabei der aus einzelnen Laschen bestehende Randbereich des zweiten Verbindungselements den Steg des ersten Verbindungselements verrastend hinterfasst. Auf diese weise sind beide Verbindungselemente fest miteinander verbunden. Um diese Verbindung wieder zu lösen kann das zweite Verbindungselement in die Entnahmestellung gebracht werden. Dazu muss eine Kraft auf den Deckel des zweiten Verbindungselements ausgeübt werden, wodurch dieser sich nach innen wölbt und die Laschen des Randbereichs nach außen gebogen werden.

Die Erfindung sieht also die Verwendung von Verbindungseinrichtungen vor, die im wesentlichen nach dem selben Prinzip wie sogenannte "Klick-Klack-Dosen" funktionieren, die normalerweise für die Verpackung von z.B. Bonbons verwendet werden.

Besondere Vorteile des erfindungsgemäßen Befestigungssystems sind, dass die Gehäusebodenplatte auf einfachste Weise an der Montageeinheit befestigt und von dieser wieder gelöst werden kann.

Gemäß einer Ausführungsform der Erfindung ist vorgesehen, die Montageeinheit und die Gehäusebodenplatte rechteckig auszubilden. Vorteilhaft ist hier, dass so mehrere Lampen, Bilderrahmen oder dergleichen platzsparend nebeneinander angebracht werden können. Damit können mehrere Lampen zu einer Lichtwand kombiniert werden.

Um eine sichere Verbindung der Gehäusebodenplatte mit der Montageeinheit zu gewährleisten, können sie über mehrere Verbindungseinrichtungen miteinander verbunden werden. Damit ist sichergestellt, dass auch schwerere Lampen befestigt werden können, ohne das die Gefahr eines Herabfallens, etwa bei einer unbeabsichtigten Berührung oder Bewegung, besteht.

Das erfindungsgemäße Befestigungssystem eignet sich in besonderer Weise für Lampen auf LED-Basis. Da diese relativ empfindlich gegen Beschädigungen sind, ist hier ein großer Vorteil, dass zunächst die Montageeinheit, die weitestgehend unempfindlich ist etwa mit Hilfe von Schrauben an einer Wand befestigt werden kann und erst danach die Gehäusebodenplatte mit den LED angebracht wird. Dieser letzte Schritt erfolgt somit nach Abschluss der eigentlichen Montagearbeiten, wodurch die Gefahr einer mechanischen Beschädigung der LEDs reduziert ist.

Um einen einfachen Anschluss an eine elektrische Stromversorgung zu gewährleisten, ist es vorteilhaft, wenn die Montageeinheit eine Anschlusseinrichtung für elektrischen Strom aufweist. Hierdurch ist es nicht mehr nötig, eine zusätzliche Verbindung zwischen der Stromversorgung und der Gehäusebodenplatte, etwa durch Anschluss einen Leitung, vorzusehen.

Es kann weiterhin vorteilhaft sein, wenn die Gehäusebodenplatte und die Montageplatte Mittel für eine gegenseitige elektrische Kontaktierung aufweisen. Diese können beispielsweise als Federkontaktstifte ausgebildet sein, die miteinander in Eingriff kommen, wenn die Verbindungselemente untereinander verbunden werden, und so ohne zusätzliche Maßnahmen die elektrische Versorgung der Gehäusebodenplatte sicherstellen.

In einer weiteren Ausführungsform des erfindungsgemäßen Befestigungssystems kann vorgesehen werden, dass die Montageeinheit elektrische Verbindungsmittel aufweist, die es erlauben, sie mit wenigstens einer weiteren benachbarten Montageeinheit elektrisch zu verbinden. Dies ist insbesondere dann von Vorteil, wenn mehrere Lampen nebeneinander angebracht werden sollen, da es dann nicht nötig ist, jede der Montageeinheiten an eine eigene Stromzuleitung anzuschließen.

Versuche haben gezeigt, das Verbindungseinrichtungen aus Metall, z.B. Edelstahl, eine hohe Beständigkeit aufweisen. Sie haben außerdem eine große Haltekraft und nutzen sich kaum ab.

Wenn die Verbindungseinrichtung eine zylindrische Form hat, ist das Aufschieben des zweiten Verbindungselements auf das erste Verbindungselement besonders leicht, da kein Verkannten möglich ist, und weiterhin ist auch eine spielfreie Verbindung möglich. Außerdem können in diesem Fall die bereits bekannten und günstig zu erwerbende Klick-Klack-Dosen in einfacher Weise direkt als Verbindungseinrichtungen verwendet werden.

Um die zweiten Verbindungselemente vor einer möglichen Beschädigung bei der Montage zu schützen, ist es von Vorteil, das erste Verbindungselement an der Montageeinheit und das zweite Verbindungselement an der Gehäusebodenplatte vorzusehen.

Gemäß einer weiteren möglichen Ausführungsform der Erfindung ist das zweite Verbindungselement beabstandet an der Montageeinheit oder der Gehäusebodenplatte befestigt. Auf diese Weise ist gewährleistet, dass das Element leicht von der Haltestellung in die Entnahmestellung und wieder zurück bewegt werden kann.

Im folgenden wird die Erfindung an Hand eines Ausführungsbeispiels unter Bezugnahme auf die beiliegenden zeichnungen näher erläutert. In der zeichnung zeigt:
- Figur 1: einen Querschnitt durch eine mit einem erfindungsgemäßen Befestigungssystem ausgestattete Lampe mit gelösten Verbindungseinrichtungen,
- Figur 2: einen vergrößerten Ausschnitt des Befestigungssystems gemäß Figur 1,
- Figur 3: im Querschnitt die Lampe aus Figur 1, bei welcher die Gehäusebodenplatte an der Montageeinheit befestigt ist und
- Figur 4: einen vergrößerten Ausschnitt aus Figur 3.

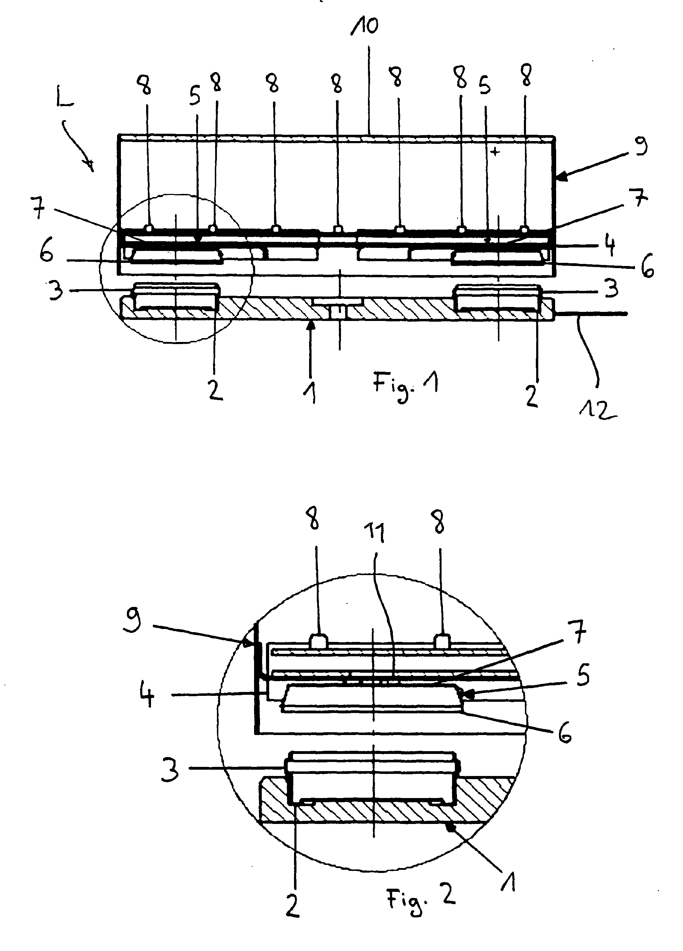

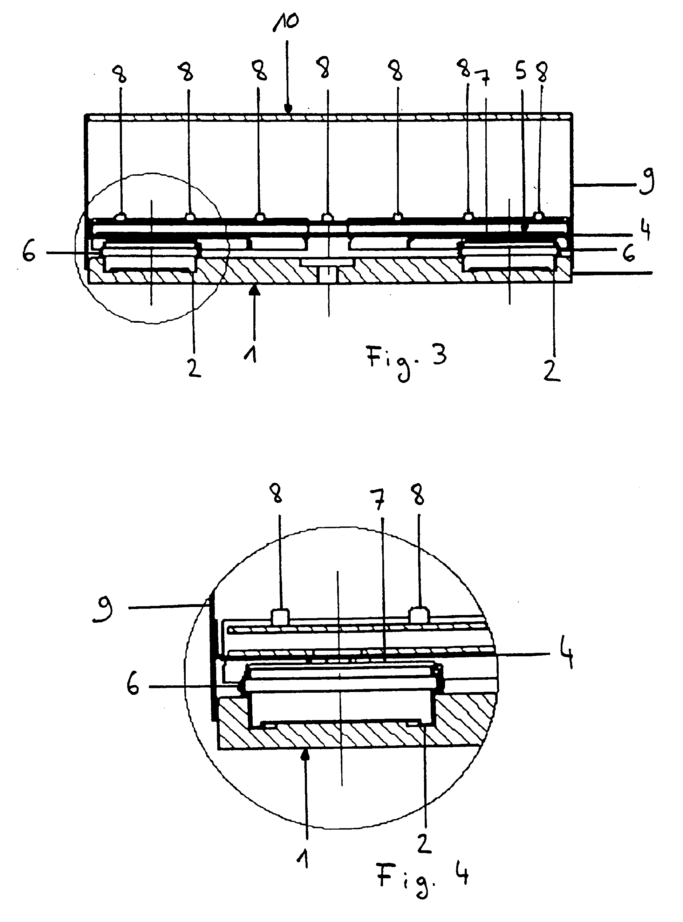

In der Zeichnung ist eine Lampenanordnung dargestellt, die mit einem Befestigungssystem gemäß der vorliegenden Erfindung ausgestattet ist. Die Lampenanordnung besitzt eine plattenförmig ausgebildete Montageeinheit 1, die rechteckig ausgebildet ist und an einer Wand oder einer Decke befestigt, beispielsweise festgeschraubt werden kann, und eine Lampeneinheit L, die von einer Gehäusebodenplatte 4 und einem daran angebrachten Lampengehäuse 9 gebildet wird. Die Montageeinheit 1 und die Lampeneinheit L können durch insgesamt vier Verbindungseinrichtungen, die in den Eckenbereichen vorgesehen sind, lösbar miteinander verbunden werden. Diese Verbindungseinrichtungen besitzen jeweils ein erstes Verbindungselement 2, das an der Montageeinheit 1 angebracht und in der Form einer zylindrischen Dose ausgebildet ist, welche unterhalb ihres Öffnungsbereichs einen umlaufenden Steg 3 aufweist. Dem ersten Verbindungselement 2 ist ein zweites Verbindungselement 5 zugeordnet, welches an der Unterseite der Gehäusebodenplatte 4 befestigt ist. Das zweite Verbindungselement 5 ist deckelförmig ausgebildet und besitzt einen Randbereich 6, der aus einzelnen, nicht verbundenen Laschen besteht, die an einem Deckelboden 7 befestigt sind. Wie insbesondere in den vergrößerten Ansichten der Figuren 2 und 4 erkennbar ist, ist das zweite Verbindungselement 5 mit Abstand von der Gehäusebodenplatte 4 angebracht, wobei zwischen dem Deckelboden 7 und der Gehäusebodenplatte 4 eine Unterlegscheibe 11 angeordnet ist. In der Zeichnung nicht erkennbar ist, dass der Deckelboden 7 in seiner Ausgangsstellung - der Haltestellung - leicht nach oben in Richtung der Gehäusebodenplatte 4 gewölbt ist.

An der Oberseite der Gehäusebodenplatte 4 ist eine Platine vorgesehen, an der eine Mehrzahl von LEDs 8 angeordnet sind.

Um die dargestellte Lampenanordnung an beispielsweise einer Wand zu befestigen, wird zunächst die Montageeinheit 1 an dieser Wand angebracht, beispielsweise festgeschraubt. Nach der Anbringung der Montageeinheit 1 wird die Lampeneinheit L an der Montageeinheit 1 befestigt, indem die deckelförmigen Verbindungselemente 5, welche an der Gehäusebodenplatte 4 vorgesehen sind, auf die an der Montageeinheit 1 vorgesehenen, dosenförmigen Verbindungselemente 2 aufgeschoben werden. Dabei wird der laschenförmige Randbereich 6 der deckelförmigen Verbindungselemente 5 elastisch aufgeweitet, bis die Laschen den umlaufenden Steg 3 hintergreifen und elastisch in ihre Haltestellung zurückschnappen und auf diese Weise die Verbindungselemente 2, 5 sicher miteinander verbinden.

Um die Gehäusebodenplatte 4 wieder von der Montageeinheit 1 zu trennen, wird erneut eine Druckkraft auf die Lampeneinheit 1 in Richtung der Montageeinheit 1 ausgeübt. Diese Druckkraft hat zur Folge, dass der gewölbte Deckelboden 7 von der Gehäusebodenplatte 4 weggewölbt wird mit der Folge, dass sein laschenförmiger Handbereich 1 nach außen in eine Entnahmestellung aufgeweitet wird, so dass die Verbindung zwischen den Verbindungselementen 2, 5 freigegeben wird und die Gehäusebodenplatte 4 von der Montageeinheit 1 getrennt werden kann.

Bevor die Gehäusebodenplatte 4 erneut mit der Montageeinheit 1 verbunden werden kann, müssen die zweiten Verbindungselemente 5 zunächst manuell wieder in ihre Haltestellung gebracht werden. Hierzu kann in einfacher Weise eine in Richtung der Gehäusebodenplatte 4 gerichtete Druckkraft auf den Deckelboden 7 ausgeübt werden, so dass sich dieser in seine Ausgangsstellung zurückwölbt. Alternativ ist es möglich, die Laschen des Randbereichs 6 wieder zusammen zu drücken. Dann klackt der Deckelboden 7 automatisch wieder in eine Ausgangslage zurück.

In der zeichnung nicht gezeigt ist, dass elektrische Verbindungsmittel in Form von Federstiften vorgesehen sind, um die Platine der Lampeneinheit L mit einer elektrischen Anschlusseinrichtung der Montageeinheit 1 zu verbinden. Die Federkontaktstifte sind dabei so ausgestaltet, dass sie automatisch in Kontakt gebracht werden, wenn die Lampeneinheit L an der Montageeinheit 1 angebracht wird und in gleicher Weise auch die elektrische Verbindung wieder unterbrochen wird, wenn die Lampeneinheit 1 von der Montageeinheit 1 gelöst wird.

In gleicher Weise ist jede Montageeinheit 1 mit elektrischen Verbindungsmitteln ausgestattet, über welche die Montageeinheiten 1 benachbarter Lampen elektrisch miteinander verbunden werden können, so dass es grundsätzlich nur erforderlich ist, eine von einer Vielzahl von Lampen an eine externe Stromversorgung anzuschließen. In der dargestellten Ausführungsform ist in Figur 1 eine solche Anschlussplatine 12 gezeigt, der eine entsprechende Anschlussplatine, welche in einer Ausnehmung an der Oberseite einer benachbarten Montageeinheit 1 angeordnet ist, zugeordnet ist. Die Anordnung ist so getroffen, dass die elektrische Kontaktierung zwischen den Platinen automatisch erfolgt, wenn die Montageeinheiten 1 an einer Wand oder dergleichen montiert werden.

## Patentansprüche

1. Befestigungssystem, insbesondere für eine Lampe, mit einer an einer Wand oder Dekke anbringbaren Montageeinheit (1) und einer Gehäusebodenplatte (4), wobei die Montageeinheit (1) und die Gehäusebodenplatte (4) über wenigstens eine verbindungseinrichtung lösbar miteinander verbunden sind und die Verbindungseinrichtung an der Montageeinheit (1) und der Gehäusebodenplatte (4) vorgesehene, paarweise kooperierende Verbindungselemente (2,5) aufweist, **dadurch gekennzeichnet, dass** das erste Verbindungselement (2) der Verbindungseinrichtung ringförmig mit einem umlaufenden Steg (3) und das zweite Verbindungselement (5) deckelartig mit einem Deckelboden (7) und einem aus einzelnen Laschen bestehenden Randbereich (6) ausgebildet sind, wobei das zweite Verbindungselement (5) derart auf das erste Verbindungselement (2) aufschiebbar ist, dass sein laschenförmig ausgebildeter Randbereich (6) den Steg (3) des ersten Verbindungselements (2) verrastend hinterfasst, und wobei das zweite Verbindungselement (5) durch eine auf den Deckel (7) in Richtung des ersten Verbindungselements (2) wirkende Kraft in eine Entnahmestellung gebracht werden kann, in der der laschenförmige Randbereich (6) nach außen aufgeweitet ist und den Steg (3) des ersten Verbindungselements (2) freigibt.

2. Befestigungssystem nach Anspruch 1, **dadurch gekennzeichnet, dass** die Montageeinheit (1) und die Gehäusebodenplatte (4) rechteckig ausgebildet sind.

3. Befestigungssystem nach einem der Ansprüche 1 oder 2, **dadurch gekennzeichnet, dass** mehrere Verbindungseinrichtungen vorgesehen sind.

4. Befestigungssystem nach einem der Ansprüche 1 bis 3, **dadurch gekennzeichnet, dass** die Lampe eine LED-Lampe (8) ist.

5. Befestigungssystem nach Anspruch 4, **dadurch gekennzeichnet**, die Montageeinheit (1) eine Anschlusseinrichtung für elektrischen Strom aufweist.

6. Befestigungssystem nach Anspruch 5, **dadurch gekennzeichnet, dass** die Montageeinheit (1) und die Gehäusebodenplatte (4) Mittel zur gegenseitigen elektrischen Kontaktierung aufweisen.

7. Befestigungssystem nach Anspruch 6, **dadurch gekennzeichnet, dass** die Mittel zur elektrischen Kontaktierung Federkontaktstifte aufweisen.

8. Befestigungssystem nach einem der Ansprüche 5 bis 7, **dadurch gekennzeichnet, dass** die Montageeinheit (1) elektrische Verbindungsmittel aufweist, die es erlauben, sie mit wenigstens einer weiteren benachbarten Montageeinheit (1) elektrisch zu verbinden.

9. Befestigungssystem nach einem der Ansprüche 1 bis 8, **dadurch gekennzeichnet, dass** die Verbindungselemente (2, 5) der Verbindungseinrichtung aus Metall bestehen.

10. Befestigungssystem nach einem der Ansprüche 1 bis 9, **dadurch gekennzeichnet, dass** die Verbindungseinrichtung eine zylindrische Form hat.

11. Befestigungssystem nach einem der Ansprüche 1 bis 10, **dadurch gekennzeichnet, dass** das erste Verbindungselement (2) an der Montageeinheit (1) und das zweite Verbindungselement (5) an der Gehäusebodenplatte (4) befestigt sind.

12. Befestigungssystem nach einem der Ansprüche 1 bis 11, **dadurch gekennzeichnet, dass** das zweite Verbindungselement (5) beabstandet befestigt ist.

## Claims

1. Mounting system, especially for lamps, with a mounting unit (1) fixable to a wall or a ceiling and a housing bottom plate (4), wherein the mounting unit (1) and the housing bottom plate (4) are releasibly connected to each other by at least one connecting device and the connecting device comprises connecting elements (2, 5) which are provided on the mounting unit (1) and the housing bottom plate (4) and are cooperating in pairs, **characterized in that** the first connecting element (2) of the connecting device is formed as a ring with a surrounding ridge (3) and the second connecting element (5) is formed like cover with a cover bottom (7) and a collar portion (6) consisting of individual clips, wherein the second connecting element (5) is slidable on the first connecting element (2) in such a way, that its collar portion (6) with the clips lockingly engages the back face of the ridge (3) of the first connecting element (2), and wherein the second connecting element (5) can be brought into a removal position by a force acting on the cover (7) in the direction towards the first connecting element (2), in which removal position the clip-like collar portion (7) is extended outwardly and releases the ridge (3) of the first connecting element (2).

2. Mounting system according to claim 1, **characterized in that** the mounting unit (1) and the housing bottom plate (4) have a rectangular form.

3. Mounting system according to any of the claims 1 or 2, **characterized in that** several connecting units are provided.

4. Mounting system according to any of claims 1 to 3, **characterized in that** the lamp is a LED-lamp (8).

5. Mounting system according to claim 4, **characterized in that** the mounting unit (1) comprises a connecting device for electric current.

6. Mounting system according to claim 5, **characterized in that** the mounting unit (1) and the housing bottom plate (4) comprise means for electrically contacting each other.

7. Mounting system according to claim 6, **characterized in that** the means for electrical contacting comprise spring contact pins.

8. Mounting system according to any of the claims 5 to 7, **characterized in that** the mounting unit (1) comprises electrical connecting means which enable to electrically connect it with a further neighboured unit (1).

9. Mounting system according to any of the claims 1 to 8, **characterized in that** the connecting elements (2, 5) of the connecting device consist of metal.

10. Mounting system according to any of the claims 1 to 9, **characterized in that** the connecting device has a cylindrical form.

11. Mounting system according to any of the claims 1 to 10, **characterized in that** the first connecting element (2) is mounted on the mounting unit (1) and the second connecting element (5) of the housing bottom plate (4).

12. Mounting system according to any of the claims 1 to 11, **characterized in that** the second connecting element (5) is distantly fixed.

## Revendications

1. Système d'ancrage spécialement pour une lampe avec une unité de montage (1) apte à être fixé sur un mur ou un plafonnier et une plaque de base du boîtier (4), de telle façon que l'unité de montage (1) et la plaque de base du boiter (4) sont reliées l'une à l'autre d'une façon démontable, à l'aide d'au moins un dispositif de jonction, qui présente au niveau de l'unité de montage et de la plaque de base du boîtier, des éléments de jonction (2,5) prévus à coopérer entre eux par paires, **caractérisé en ce que** le premier élément de liaison (2) du dispositif de jonction est formé annulaire d'une crête (3) circulaire, alors que le deuxième élément de jonction (5) est formé operculaire d'un couvercle de base (7) et d'un rebord marginal (6) constitué des éclisses unique, de manière que le deuxième élément de jonction (5) est remettable sur le premier élément de jonction (2) de telle façon que son rebord marginal (6) formé en forme des éclisses, est encliqueté sur la crête (3) du premier élément de jonction (2) et, de manière que le deuxième élément de jonction (5) peut être menu sous l'action d'une force agissante sur le couvercle (7) et dans la direction du premier élément de jonction (2), dans une position de reprise, dans laquelle le rebord marginal en forme des éclisses (6) est élargi vers l'extérieur et la crête (3) du premier élément de jonction (2), est débloquée.

2. Système d'ancrage selon revendication 1, **caractérisé en ce que** l'unité de montage (1) et la plaque de base du boîtier (4) possèdent une forme rectangulaire.

3. Système d'ancrage selon l'une des revendications 1 ou 2, **caractérisé en ce que** plusieurs dispositifs de jonctions sont prévus.

4. Système d'ancrage selon l'une des revendications 1 à 3, **caractérisé en ce que** la lampe est une lampe à LED (8).

5. Système d'ancrage selon revendication 4, **caractérisé en ce que** l'unité de montage (1) présente un dispositif de raccordement pour le courant électrique.

6. Système d'ancrage selon revendication 5, **caractérisé en ce que** L'unité de montage (1) et la plaque de base du boîtier (4), présentent toutes les deux des moyen pour un contact électrique mutuel.

7. Système d'ancrage selon revendication 6, **caractérisé en ce que** les moyens pour le contact électrique présentent des pitons de contact à ressort.

8. Système d'ancrage selon l'une des revendications 5 à 7, **caractérisé en ce que** l'unité de montage (1) présente un moyen de connexion électrique, qui permet un raccordement électrique de cette dernière avec au moins une autre unité de montage (1) voisine.

9. Système d'ancrage selon l'une des revendications 1 à 8, **caractérisé en ce que** les éléments de jonctions (2,5) du dispositif de jonction, sont constitués en métal.

10. Système d'ancrage selon l'une des revendications 1 à 9, **caractérisé en ce que** le dispositif de jonction à une forme cylindrique.

11. Système d'ancrage selon l'une des revendications 1 à 10, **caractérisé en ce que** le premier élément de jonction (2) est fixé à l'unité de montage (1) alors que le deuxième élément de jonction (5) est fixé à la plaque de base du boîtier (4).

12. Système d'ancrage selon l'une des revendications 1 à 11, **caractérisé en ce que** le deuxième élément de jonction (5) est fixé à un certain écart.
